# FASCICULE DE BREVET EUROPEEN

(11) **EP 3 031 110 B1**
(45) Date de publication et mention de la délivrance du brevet: **04.04.2018**
(21) Numéro de dépôt: 14790177.1
(22) Date de dépôt: 04.08.2014
(51) Int. Cl.: H02J 3/00, H02J 3/38, H02J 3/14, H02J 4/00, B64D 27/00

(54) **CIRCUIT DE DISTRIBUTION D'ELECTRICITE AVEC INTERRUPTEURS ALIMENTANT DES CHARGES PAR UN NOMBRE SÉLECTIONNABLE DE SOURCES**
ELEKTRISCHES VERTEILUNGSNETZ MIT SCHALTERN FÜR DIE VERSORGUNG VON LASTEN DURCH EINE WÄHLBARE ANZAHL VON QUELLEN
ELECTRIC DISTRIBUTION CIRCUIT WITH SWITCHES TO FEED LOADS FROM A SELECTABLE NUMBER OF SOURCES

(30) Priorité: 05.08.2013 FR 1357793
(43) Date de publication de la demande: 15.06.2016
(73) Titulaire: Safran Transmission Systems, 92700 Colombes (FR)
(72) Inventeur: LUCAS, Romain, F-44600 Saint-Nazzaire (FR)
(74) Mandataire: Gevers & Orès
(86) Numéro de dépôt international: PCT/FR2014/052030
(87) Numéro de publication internationale: WO 2015/019015

(56) Documents cités:
- WO-A1-2009/153657

## Description

### Domaine technique :

La présente invention concerne un circuit de distribution d'électricité qui connecte deux sources à des charges, de manière différente suivant les modes de fonctionnement. Il vise plus particulièrement la disposition des interrupteurs dans le circuit lorsque certaines charges nécessitent de pouvoir être alimentées par l'une ou l'autre des deux sources et, dans certains cas, par les deux sources simultanément.

### Etat de l'art :

Dans de nombreuses installations, notamment pour les systèmes embarqués dans des aéronefs ou, plus spécifiquement, pour le pilotage des appareils propulsifs, plusieurs équipements électrotechniques sont alimentés par deux sources pouvant être activées en parallèle.

Cette configuration apporte de la sécurité grâce à une redondance d'alimentation des équipements et aussi de la souplesse d'utilisation car elle permet d'adapter la sollicitation des sources en fonction du mode de fonctionnement des équipements. En effet, pour le type d'installation considérée, tous les équipements ne sont pas actifs ou ne fonctionnent pas à pleine puissance dans les différentes configurations d'utilisation de l'installation. Donc, il arrive que les deux sources soient reliées à un ou plusieurs équipements susceptibles de requérir chacun, à des moments différents, la puissance cumulée que peuvent fournir les deux sources et à une série d'équipements ne requérant à aucun moment plus de puissance que ne peut fournir l'une des sources. Il est donc intéressant de pouvoir moduler les raccordements pour alimenter ces équipements.

Dans la suite du présent document, les modes de fonctionnement de chaque équipement, appelé une charge, sont pilotés par des moyens extérieurs au circuit de distribution. Les sources sont également considérées ici comme ayant leurs propres dispositifs de pilotage. Dans ces conditions, le circuit de distribution d'électricité entre les sources et les charges est constitué d'un ensemble de connexions et de dispositifs de commutation qui forment des chemins entre les sources et les charges qui peuvent être ouverts ou fermés pour adapter sa configuration au fonctionnement des sources et des charges

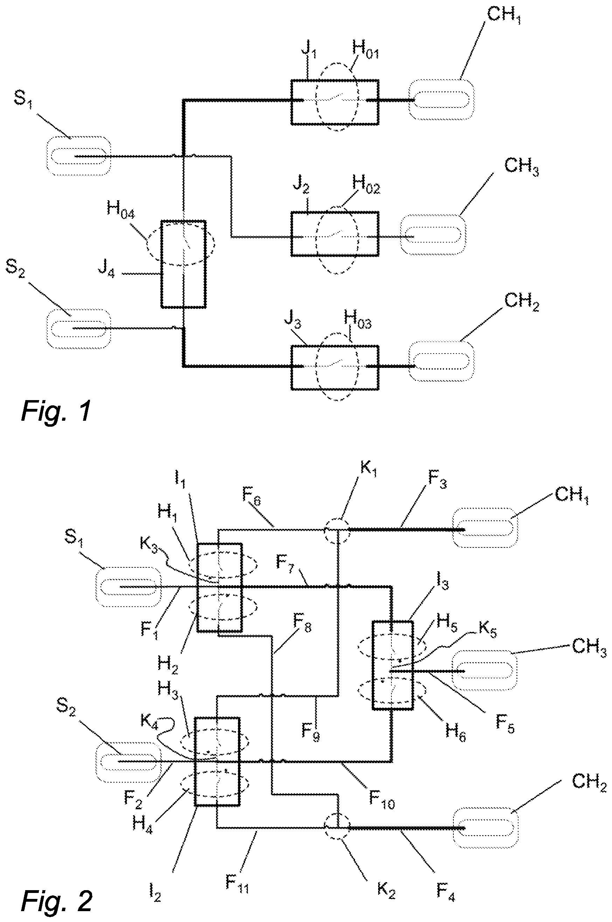

De manière habituelle, comme c'est illustré sur la figure 1 pour trois charges CH₁, CH₂, CH₃ alimentées par les deux sources S₁ et S₂, chaque charge est raccordée au circuit par un interrupteur simple flux, J₁, J₂ ou J₃, comportant un seul dispositif de commutation qui est ouvert ou fermé selon que la charge est active ou pas. Par ailleurs, pour pouvoir utiliser les deux sources en même temps sur certaines charges, il est réalisé entre elles une connexion pilotée par un interrupteur simple flux J₄. Le circuit de la figure 1 peut être facilement généralisé à plus de trois charges en raccordant les charges supplémentaires de part et d'autre de l'interrupteur J₄ placé entre les sources. Chaque charge nécessite une alimentation en courant ayant un certain nombre de caractéristiques, par exemple en termes de tension et de courant, et impose en retour un certain nombre de contraintes aux équipements placés en amont sur le circuit. Il en est de même pour les sources, qui vont également imposer des contraintes aux équipements placés en face d'elles dans le circuit, en fonction de la sollicitation des charges. Il est facile de dimensionner les interrupteurs simple flux pour le circuit représenté sur la figure 1. Chaque interrupteur J₁, J₂, J₃, placé en face d'une charge CH₁, CH₂, CH₃, est dimensionné par rapport aux contraintes maximales de la charge. L'interrupteur J₄ placé entre les sources S₁ et S₂, quant à lui, est dimensionné par rapport au maximum de la contrainte que peut imposer l'une ou l'autre source pour la sollicitation maximale des charges.

Bien que répondant aux principaux objectifs, la solution actuellement utilisée dans la figure 1 présente plusieurs inconvénients. En matière de sécurité d'utilisation, il n'y a pas de tolérance à tous les premiers défauts, notamment ceux liés aux interrupteurs J₁, J₂, J₃, placés en face des charges. Une charge ne peut plus être alimentée si son interrupteur tombe en panne en position ouverte et ne peut plus être déconnectée si c'est en position fermée. Par ailleurs, si une source S₁ ou S₂ est défaillante, elle ne peut être isolée du circuit. En matière d'utilisation, lors de la parallélisation des sources, lorsque l'interrupteur J₄ placé entre elles est fermé, l'impédance de cet interrupteur fait que les chemins reliant les deux sources S₁, S₂, et une charge, CH₁, CH₂ ou CH₃, n'ont pas les mêmes propriétés.

Enfin au niveau de la réalisation, ce montage n'est pas optimal en matière de coûts, d'encombrement et de masse. Premièrement, dès qu'il y a au moins une charge nécessitant d'être alimentée par les deux sources, celle-ci impose à l'interrupteur qui la pilote des contraintes supérieures au maximum de celles que chaque source peut fournir. Le facteur peut aller jusqu'au double. Or le poids et l'encombrement des interrupteurs, particulièrement lorsque le circuit est triphasé, sont directement liés à ces contraintes. De plus, au-delà de certaines contraintes, il est impossible d'utiliser des interrupteurs sur étagère. La fabrication de ce type d'interrupteur impose donc des surcoûts. Par ailleurs, la solution de la figure 1 utilise quatre interrupteurs unitaires différents. Le poids et l'encombrement du circuit étant directement lié au nombre d'interrupteurs différenciés installés, il serait intéressant de diminuer ce nombre.

La présente invention a pour objectif de réaliser un circuit ne présentant pas les inconvénients précités.

### Présentation de l'invention:

L'invention concerne un circuit de distribution d'électricité destiné à alimenter au moins deux charges à partir de deux sources, comportant des conducteurs, dont certains forment des sorties aptes à être connectées avec les sources et avec les charges, et des dispositifs de commutation, ledit circuit étant agencé pour que les conducteurs avec les dispositifs de commutation établissent au moins un chemin conduisant l'électricité entre chaque charge et les deux sources, chaque chemin entre une source et une charge comporte un dispositif de commutation unique, et en ce que, pour au moins une paire de charges déterminée, les deux dispositifs de commutation sur les chemins reliant chaque source aux deux charges de ladite paire sont intégrés dans un interrupteur double flux, qui est un appareil intégrant deux dispositifs de commutation aptes à piloter chacun la liaison d'un conducteur avec le même contact central, appelé point milieu, ledit interrupteur double flux étant connecté en son point milieu à la sortie destinée à être connectée à la source correspondante.

Grâce à un dispositif de commutation unique par chemin, l'invention permet d'associer à volonté n'importe quelle charge avec l'une ou l'autre des deux sources ou les deux. Outre la souplesse d'utilisation, un tel circuit offre une tolérance à toute première panne sur l'installation. En effet, il permet d'isoler une source ou une charge défaillante tout en continuant à piloter le restant de l'installation. De même, il offre des chemins de contournement si un dispositif de commutation est en panne.

De plus, un dispositif de commutation ne voit jamais passer un flux de puissance supérieur à ce que peut fournir l'une des deux sources, même si la charge utilise la puissance des deux sources. Un circuit selon l'invention peut donc permettre de limiter les contraintes de fonctionnement d'un dispositif de commutation à celles imposées par chacune des sources, même si une charge peut imposer des contraintes supérieures. Enfin, notamment dans le cas où plus de trois charges sont reliées à deux sources, le nombre de dispositifs de commutation est minimum.

De manière pratique, un interrupteur double flux intègre deux dispositifs de commutation devant supporter les mêmes contraintes de fonctionnement est moins lourd et pose moins de problèmes d'intégration que deux appareils distincts. On a donc intérêt à regrouper par deux les dispositifs de commutation dans ces interrupteurs double flux. Par ailleurs, il est possible de réaliser les connexions selon l'invention en reliant le point milieu d'un interrupteur double flux à chaque charge, ses deux autres sorties étant reliées aux sources. Dans ce cas, en fonctionnement nominal de l'installation, les contacts de l'interrupteur double flux en son point milieu ne doivent pas voir passer une puissance supérieure à la puissance maximale de la charge. L'interrupteur double flux est donc dimensionné par les contraintes imposées par la charge.

Enfin, par rapport à ce qui a été décrit précédemment, en fonctionnement nominal de l'installation, les contacts de l'interrupteur double flux placé devant une source en son point milieu ne doivent pas voir passer une puissance supérieure à la puissance maximale de la source. L'interrupteur double flux est donc dimensionné par les contraintes imposées par la source. Cette disposition est particulièrement intéressante lorsque lesdites deux charges peuvent, lors de certaines phases de fonctionnement, utiliser une puissance supérieure à ce que peut fournir une seule source. Cela permet de dimensionner les deux interrupteurs pour des contraintes moindres, donc d'en diminuer le coût et la masse par rapport à des interrupteurs qui seraient dimensionnés pour les contraintes imposées par ces charges. Notamment, en matière de coût, il peut se faire que les contraintes imposées par les sources permettent d'utiliser des produits sur étagère alors que celles imposées par les charges ne le permettent pas.

De préférence, pour chaque charge n'appartenant pas à ladite paire, les dispositifs de commutation sur les chemins reliant cette charge aux deux sources sont intégrés dans un interrupteur double flux connecté en son point milieu à la sortie destinée à être connectée à ladite charge.

Cette configuration est particulièrement avantageuse lorsque les charges appartenant à ladite paire sont celles qui imposent les contraintes maximales. Notamment, si les charges sont classées par contraintes décroissantes, une configuration intéressante se produit si la troisième charge ne nécessite pas plus de puissance que n'en fournit la source la plus puissante. Dans ce cas, on est sûr de limiter le dimensionnement des interrupteurs à la contrainte de fonctionnement de la source la plus puissante.

Suivant une autre caractéristique, dans un circuit de distribution d'électricité pour lequel les interrupteurs double flux connectés en leur point milieu aux sorties destinées à être connectées à une charge, sont dimensionnés pour des contraintes de fonctionnement inférieures ou égales à la plus forte des contraintes de fonctionnement des deux interrupteurs double flux connectés en leur point milieu aux sorties destinées à être connectées à une source. De plus, cette configuration minimise le nombre d'appareils individuels à utiliser pour réaliser l'ensemble des dispositifs de commutation dans les connexions entre les sources et les charges. Sachant que la masse et la difficulté d'intégration est liée à ce nombre d'appareils individuels, qu'ils soient des interrupteurs à double ou simple flux, ce mode de réalisation est optimal de ce point de vue.

Dans un mode de réalisation, les conducteurs et les dispositifs de commutation sont agencés pour traiter du courant triphasé. En effet, les contraintes de fonctionnement en circuit triphasé entraînent des contraintes de réalisation particulièrement délicates pour les interrupteurs triple pôle, qu'ils soient à simple ou double flux. Il est donc tout à fait intéressant dans leur cas d'en limiter le niveau de puissance de fonctionnement, ainsi que le nombre.

L'invention concerne également une installation comportant un circuit selon l'un des modes de réalisation précédents, deux sources et des charges alimentées par les sources au moyen dudit circuit, dont chaque interrupteur est dimensionné pour répondre aux contraintes de fonctionnement de la charge ou de la source connectée à son point milieu.

Elle concerne tout particulièrement une installation comportant deux sources aptes à délivrer chacune une puissance déterminée et au moins deux charges présentant des modes de fonctionnement pouvant nécessiter l'alimentation des deux sources, ces deux charges formant ladite paire de charges.

Avantageusement, les deux charges faisant partie de ladite paire sont celles qui imposent, à un organe de commutation placé en série avec elles, les contraintes maximales sur l'ensemble des charges de l'installation. Cette dernière configuration permet d'utiliser des interrupteurs doubles flux dont la contrainte de dimensionnement maximale est la plus faible.

### Description détaillée de l'invention :

La présente invention sera mieux comprise et d'autres détails, caractéristiques et avantages de la présente invention apparaîtront plus clairement à la lecture de la description qui suit, en référence aux dessins annexés sur lesquels :
La figure 1 présente le schéma d'un circuit de distribution d'électricité à trois charges par deux sources selon l'état de la technique.
La figure 2 présente le schéma d'un circuit de distribution d'électricité à trois charges par deux sources selon l'invention.
La figure 3 présente le schéma d'un circuit de distribution d'électricité à 2+N charges par deux sources selon l'invention.
La figure 4 présente le schéma d'une variante de réalisation d'un circuit de distribution d'électricité à 2+N charges par deux sources.

Un premier exemple d'application de l'invention est présenté pour trois charges, CH₁, CH₂, et CH₃, alimentées par deux sources S₁ et S₂ en courant triphasé. Dans cet exemple, la source S₁ fournit une puissance P₁ et la source S₂ une puissance P₂, inférieure ou égale à P₁. Les charges CH₁ et CH₂ sont susceptibles, dans certaines configurations, de consommer une puissance supérieure à ce que peut fournir l'une des deux sources, tout en pouvant être utilisées, dans d'autres configurations, avec une puissance inférieure. La troisième charge CH₃, par contre, consomme toujours une puissance inférieure. Cette application permet de comparer l'art antérieur, en référence à la figure 1, avec une réalisation selon l'invention, en référence à la figure 2.

Par rapport à la suite de la description, les composants des figures 1 et 2 sont représentés par un seul trait pour simplifier la compréhension des connexions entres éléments, bien que l'on soit en courant triphasé dans l'exemple d'application. En effet, les circuits des trois phases suivent exactement les mêmes schémas. Dans le document, la notion de conducteur fait référence à un dispositif conduisant le courant dans toutes ses composantes avec une impédance négligeable. Pour le courant triphasé, le conducteur est donc constitué de trois brins. Par ailleurs, la notion de triple pôle pour un interrupteur, fait référence aux trois circuits parallèles que suivent les trois phases du courant. En particulier, un dispositif de commutation s'entend dans la suite comme un moyen d'ouvrir ou de fermer en même temps les trois circuits parallèles des trois phases du courant triphasé. En revanche, les notions de simple flux ou de double flux pour un interrupteur font référence au nombre de flux de courant se rejoignant sur un contact, les interrupteurs correspondants intègrent donc un ou deux dispositifs de commutation.

Compte tenu de leurs caractéristiques et de leurs conditions d'emploi prévues, ces sources et ces charges sont susceptibles d'induire une contrainte maximale sur un organe de commutation triple pôle simple flux placé en série avec elles. Ainsi, dans le circuit selon l'état de la technique sur la figure 1, chaque charge CHᵢ (i allant de 1 à 3), induit une charge maximale Cᵢ sur le dispositif de commutation H₀ᵢ placé en série avec elles. Les interrupteurs J₁, J₂ et J₃, qui intègrent ces dispositifs de commutation H₀₁, H₀₂ et H₀₃, sont donc dimensionnés respectivement pour les contraintes C₁, C₂ et C₃. L'interrupteur J₄, placé entre les sources S₁ et S₂, est quant à lui en série soit avec la source S₁ soit avec la source S2, selon les conditions d'utilisation : soit le flux électrique va de S₁ vers la charge CH3, soit il va de la source S₂ vers l'une des charges CH₁ ou CH₂. La source S₁ imposant une contrainte Cs1 et la source S₂ une contrainte Cs2, l'interrupteur J₄ est dimensionné pour la valeur maximale de ces deux contraintes.

En référence à la figure 2, pour réaliser le circuit, les sources S₁ et S₂, les charges CH₁, CH₂, CH₃, et les interrupteurs I₁, I₂, I₃, sont connectés à des conducteurs F₁ à F₁₁. Les sorties du circuit sont réalisées par les conducteurs F₁ à F₅, équipés des moyens aptes à établir une connexion avec la charge ou la source correspondante. Cela permet de réaliser pour le courant triphasé des chemins reliant chaque charge aux deux sources, ouverts ou fermés selon l'état des dispositifs de commutation H₁ à H₆ des interrupteurs I₁, I₂, I₃. Il est à noter que les contacts centraux K₃, K₄, K₅ des interrupteurs I₁, I₂, I₃ forment chacun une jonction entre deux chemins. Par ailleurs, les deux chemins reliant la charge CH₁ aux sources S₁ et S₂ se rejoignent en K₁, et les deux chemins reliant la charge CH₂ aux sources S₁ et S₂ se rejoignent en K₂. Il est à noter que les interrupteurs I₁ et I₂ se trouvent sur ces chemins entre la source, S₁ ou S₂, et la jonction, K₁ ou K₂, avant la partie commune, F₃ ou F₄, reliée à la charge. De même, l'interrupteur I₃ réalise les dispositifs de commutation sur les chemins entre les sources S₁, S₂, avant la partie commune F₅ reliée à la charge CH₃.

Le circuit selon l'invention utilise donc trois interrupteurs triple pôle double flux connectés de la manière suivante :
- le point milieu de l'interrupteur I₁ est connecté à la source S₁, une sortie à la charge CH₁ et une sortie à la charge CH₂ ;
- le point milieu de l'interrupteur I₂ est connecté à la source S₂, une sortie à la charge CH₁ et une sortie à la charge CH₂ ;
- le point milieu de l'interrupteur I₃ est connecté à la charge CH₃, une sortie à la source S₁ et une sortie à la source S₂.
Ces interrupteurs triple pôle double flux ont de plus comme caractéristique que la commutation de la connexion des contacts liés à leur point milieu avec les contacts liés un côté est indépendante de celle correspondant au côté opposé.

On constate donc facilement qu'un tel circuit permet au moins les associations suivantes, susceptibles de correspondre à un mode d'utilisation de l'installation :
- A1 : une seule charge, CH₁, CH₂ ou CH₃, consommant une puissance inférieure à P₂ est alimentée par une seule des sources S₁ ou S₂ ;
- A2 : une seule des charges, CH₁ ou CH₂, consommant une puissance inférieure à P₁ mais supérieure ou égale à P₂ est alimentée par la seule source S₁;
- A3 : une seule des charges, CH₁ ou CH₂, consommant une puissance inférieure à P₁+P₂ mais supérieure ou égale à P₂ est alimentée par les deux sources S₁ et S₂ fournissant la puissance souhaitée avec une répartition de puissance quelconque dans la limite de leurs capacités respectives ;
- A4 : une seule des charges, CH₁ ou CH₂, consommant une puissance inférieure à P₁+P₂ mais supérieure à P₁ est alimentée par les deux sources S₁ et S₂ fournissant la puissance souhaitée avec une répartition de puissance quelconque dans la limite de leurs capacités respectives ;
- A5 : Deux charges, à choisir dans CH₁, CH₂ et CH₃, consommant simultanément des puissances inférieures ou égales, pour la première charge à P₁ et pour la deuxième charge à P₂ sont alimentées de manière dédiée respectivement par S₁ et S₂.

On constate un premier avantage de l'invention sur l'état de l'art au niveau des associations possibles, donc de la souplesse d'utilisation de l'installation. En effet, le circuit de la figure 1 n'étant pas symétrique, il n'est pas possible de mettre en oeuvre l'association A2 si c'est la charge CH₂ qui consomme plus que la puissance que peut fournir S₂. En effet, il n'y est pas possible de déconnecter la source S₂ dans ce cas sans couper la liaison aussi avec la source S₁. Pour réaliser l'association A2 avec le circuit de la figure 2, par contre, il suffit d'ouvrir les interrupteur I₂ e I₃ des deux côtés en mettant l'interrupteur I₁ en position ouvert vers la charge CH₁ et fermé vers la charge CH₂.

De même, pour l'exemple de l'association A5 dédiant la source S₁ à la charge CH₂ et la source S₂ à la charge CH₁, on peut facilement vérifier qu'il est possible de créer un chemin réalisant cette association avec l'invention alors que le circuit de la figure 1 ne permet pas d'alimenter à la fois les deux charges en dissociant les circuits par où transitent les flux de puissance. Il est possible de trouver d'autres exemples. De plus, comme il a été remarqué dans le préambule, dans la réalisation d'une association de type A3 ou A4 avec le circuit de la figure 1, les chemins reliant la charge aux deux sources présentent une différence d'impédance à cause de l'interrupteur J₄ positionné entre ces deux sources, alors que le circuit de la figure 2 selon l'invention, en utilisant des interrupteurs I₁ et I₂ identiques, permet d'obtenir cette symétrie.

Par ailleurs, compte tenu du fait que les contacts liés aux points milieu des interrupteurs triple pôle double flux sont en série avec les sources et les charges auxquelles ils sont connectés, les contraintes Ci (i allant de 1 à 3) pour les charges Ci, ainsi que Cs₁ et Cs₂ pour les sources, qui doivent être prises en compte pour le dimensionnement de ces interrupteurs, sont les mêmes que celles définies précédemment. Donc :
- l'interrupteur I₁ triple pôle double flux est dimensionné pour la contrainte Cs₁ imposée par la source S₁ ;
- l'interrupteur I₂ triple pôle double flux est dimensionné pour la contrainte Cs₂ imposée par la source S₂ ;
- l'interrupteur I₃ triple pôle double flux est dimensionné pour la contrainte C₃ imposée par la charge CH₃.
On constate donc que les plus grandes contraintes C₁ et C₂, associées aux charges CH₁ et CH₂, n'interviennent pas dans le dimensionnement d'un circuit selon l'invention, contrairement à l'art antérieur.

Le gain peut être illustré dans l'application particulière où deux onduleurs S₁ et S₂ sont associés à deux machines synchrones à aimant permanent 30kVA, CH₁ et CH₂, et une machine asynchrone CH₃ à aimant permanent de 10kVA. De plus, l'un quelconque des moteurs CH₁ ou CH2 est susceptible d'être utilisé jusqu'à des puissances de 80 kVA (Un transitoire long est prévu dans le fonctionnement de l'installation). On fait le choix d'utiliser deux onduleurs S₁ et S₂ identiques qui ont une puissance maximale de sortie de 40kVA, soit la moitié de la puissance maximale prévue pour l'un des moteurs.

Conformément à l'invention, on réalise donc le circuit en utilisant deux interrupteurs I₁ et 12 triple pôle double flux dimensionnés pour la contrainte 40 kVA devant les onduleurs S₁ et S₂, et un interrupteur I₃ triple pôle double flux dimensionné pour la contrainte 10 kVA devant le moteur synchrone CH₃.

On constate que ce circuit permet effectivement de réaliser les associations envisagées :
- A1 : l'un des moteurs, CH₁, CH₂ ou CH₃, est alimenté à sa puissance nominale par un onduleur, S₁ ou S₂ ;
- A3 ou A4 : l'un des moteurs, CH₁, CH₂ ou CH₃, est alimenté à sa puissance nominale par les deux onduleurs S₁ et S₂ ;
- A5 : les deux moteurs CH₁ et CH₂ sont alimentés à leur puissance nominale simultanément par l'onduleurS₁ pour l'un et par S₂ pour l'autre ;
- A2 : un des moteurs, CH₁ ou CH₂, est alimenté par les deux onduleurs S₁ et S₂ en parallèle à une puissance de 80 kVA .

Pour pouvoir réaliser ces configurations avec un circuit tel que représenté sur la figure 1, il aurait fallu mettre deux interrupteurs J₁ et J₂ dimensionnés pour une contrainte de 80 kVA à la place des deux interrupteurs I₁ et I₂ dimensionnés pour une contrainte de 40 kVA. Cet exemple illustre le fait que l'on peut gagner jusqu'à un facteur deux sur les contraintes que doit supporter un interrupteur. De plus, l'invention n'utilise que trois interrupteurs triple pôle double flux contre quatre interrupteurs triple pôle simple flux pour la solution antérieure. Compte tenu de la technologie, les trois interrupteurs de l'invention ont une masse et un encombrement moins importants que les quatre interrupteurs de l'état de l'art antérieur, dont certains doivent, de plus, être dimensionnés pour des contraintes supérieures.

Du point de vue de la sécurité, le mode de réalisation présenté sur la figure 1 offre une tolérance à toute première panne pour un flux de puissance inférieur ou égal à P₂ et offre dans certains cas une tolérance de panne pour un flux de puissance égal à P₁+P₂. En effet :
- En cas de défaut au niveau d'une source S₁ ou S₂, on peut l'isoler grâce à l'interrupteur, I₁ ou I₂, placé en face d'elle.
- En cas de défaut au niveau d'une charge CH₁ ou CH₂, on peut l'isoler en ouvrant les dispositifs de commutation en face des contacts qui lui correspondent sur les interrupteurs I₁ et I₂.
- En cas de défaut au niveau de la charge CH₃, on peut l'isoler grâce à l'interrupteur I₃, placé en face d'elle.
- En cas d'un dispositif de commutation entre contacts bloqué à l'état ouvert sur l'un des interrupteurs, la charge impactée reste pilotable par la source à laquelle il est relié par le dispositif de commutation entre contacts non bloqué ; De plus, s'il s'agit d'un dispositif de commutation entre contacts d'un des deux interrupteurs, I₁ ou I₂, placé en face d'une source, l'une des charges CH₁ ou CH₂ peut encore être alimentée à la puissance P₁+P₂.
- en cas d'un dispositif de commutation entre contacts bloqué à l'état fermé sur un interrupteur, la charge impactée reste pilotable par la source à laquelle elle est reliée en permanence et par la mise en parallèle des deux sources ; toutes les charges restent pilotables par au moins une source ; par contre, seule l'une des charges CH₁ ou CH₂ peut encore être alimentée à la puissance P₁+P₂, à condition que le dispositif de commutation entre contacts bloqué soit un de ceux qui impacte cette charge.

Dans une mise en oeuvre particulière, une sécurité mécanique peut être installée sur un interrupteur qui empêche la fermeture simultanée de ses deux dispositifs de commutation. Par exemple, ce système peut être installé sur l'interrupteur I₃. Cela empêche de faire passer accidentellement dans la charge CH₃ une surpuissance provenant de la combinaison des deux sources. Dans un autre exemple, ce système installé sur l'interrupteur I₂ peut empêcher un effondrement de la source S₂ en lui demandant de fournir une puissance trop élevée pour alimenter les deux charges CH₁ et CH₂ à la fois.

L'invention concerne bien sûr une réalisation ne comportant que les charges CH₁ et CH₂ qui peuvent nécessiter une puissance supérieure à celle P₂ délivrée par la plus faible des deux sources. Dans ce cas, le rapport du nombre d'interrupteurs utilisés par rapport à l'état de la technique antérieure est de deux à trois.

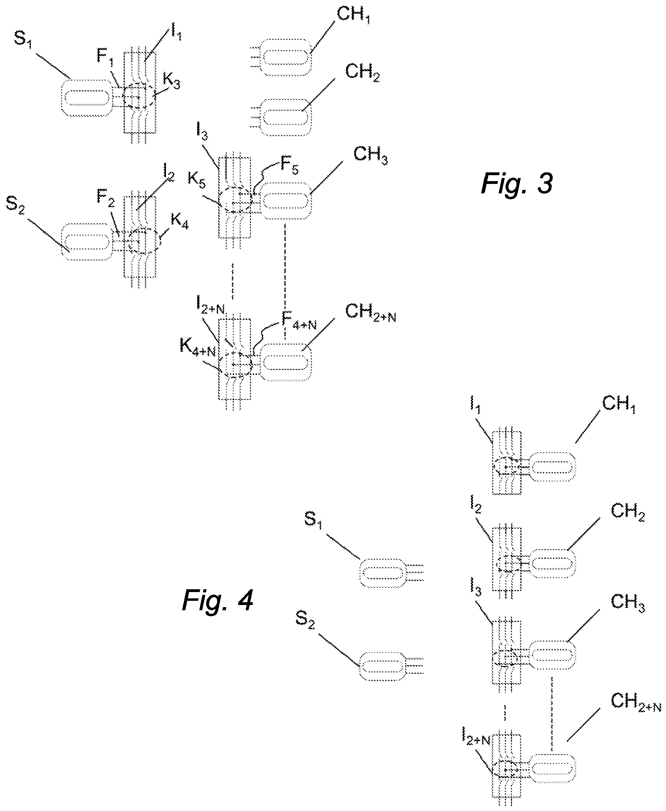

Dans un mode de réalisation plus étendu, à côté des deux charges CH₁ et CH₂, l'installation comporte N charges dont la puissance maximale de fonctionnement est inférieure à la puissance P₂ que peut délivrer la plus faible des sources. Ces charges, notées de CH₃ à CH_{2+N}, imposent donc aux contacts placés en série avec elles des contraintes C₃ à C_{2+N} qui sont inférieures aux contraintes CS₁ et CS₂ imposées par les sources S₁ et S₂. En référence à la figure 3, le circuit selon l'invention associe respectivement à chaque charge CH₃ à CH_{2+N}, un interrupteur triple pôle double flux I₃ à I_{2+N}, dimensionné pour une contrainte C₃ à C_{2+N}. Chaque charge CH₃ à CH_{2+N} est respectivement connectée au point milieu K₅ à K_{4+N} de l'interrupteur I₃ à I_{2+N} par un conducteur de sortie F₅ à F_{4+N}. Comme pour le premier mode de réalisation, chaque interrupteur I₃ à I_{2+N} a une connexion au moyen de conducteurs, non représentés, avec la source S₁ par l'un de ses côtés de sortie et avec la source S₂ par l'autre côté.

Par ailleurs, comme dans le premier mode de réalisation, la source S₁ est connectée par un conducteur de sortie F₁ au point milieu K₃ d'un interrupteur I₁, dimensionné pour la contrainte CS₁ et la source S₂ est connectée par un conducteur de sortie F₂ au point milieu K₄ d'un interrupteur I₂, dimensionné pour la contrainte CS₂. Les connexions par des conducteurs, non représentés sur la figure 3, avec les charges CH₁ et CH₂ sont les mêmes que sur la figure 2.

Ce mode de réalisation permet les mêmes associations A1 à A5 que celles décrites pour le premier mode en remplaçant la charge CH₃ par l'une quelconque des charges CH₃ à CH_{2+N}. Il vérifie les mêmes critères de tolérance à une première panne. Enfin, ce sont toujours les interrupteurs I₁ et I₂ qui ont les contraintes de fonctionnement les plus importantes, indépendamment des valeurs correspondantes aux charges CH₁ et CH₂.

De manière plus générale encore, ce mode de réalisation est applicable même si plus de deux charges nécessitent d'être alimentées en parallèle par les deux sources. Dans ce cas, on classe les charges par ordre décroissant des contraintes qu'elles imposent à un organe de commutation placé en série avec elles. Les charges CH₁ et CH₂, connectées aux interrupteurs I₁ et I₂ placés devant les sources, sont dans ce cas celles qui imposent les contraintes les plus fortes. Alors, à défaut de limiter le dimensionnement des interrupteurs placés devant les charges à la plus petite des contraintes imposées par les sources, on écrête les contraintes les plus fortes, imposées par CH₁ et CH₂, à la contrainte de la plus forte source, S₁.

Dans une variante de réalisation, les charges CH₁ et CH₂ sont traitées comme les charges CH₃ à CH_{2+N} en les connectant au point milieu des interrupteurs I₁ et I₂, comme c'est illustré sur la figure 4. Cette variante a les mêmes fonctionnalités que le mode de réalisation précédent mais, cette fois les interrupteurs I₁ et I₂ doivent être dimensionnés pour les contraintes correspondant aux charges CH₁ et CH₂. Ils sont donc plus encombrants et plus coûteux.

Dans une variante des différents modes de réalisation présentés, au moins un des interrupteurs triple pôle double flux est remplacé par deux interrupteurs triple pôle simple flux, dimensionnés pour la même contrainte de fonctionnement. Cette variante a les mêmes fonctionnalités et vérifie les mêmes critères de sécurité que la variante correspondante réalisée avec uniquement des interrupteurs triple pôle double flux. Par contre la masse des deux interrupteurs est plus importante et leur intégration mécanique plus complexe.

## Revendications

1. Circuit de distribution d'électricité destiné à alimenter au moins deux charges (CH₁, CH₂, CH₃) à partir de deux sources (S₁, S₂), comportant des conducteurs (F₁ à F₁₁), dont certains (F₃, F₄, F₅, F₁, F₂) forment des sorties aptes à être connectées avec les sources (F₁, F₂) et avec les charges (F₃, F₄, F₅), et des dispositifs de commutation (H₁, H₂, H₃, H₄, H₅, H₆), ledit circuit étant agencé pour que les conducteurs avec les dispositifs de commutation établissent au moins un chemin conduisant l'électricité entre chaque charge (CH₁, CH₂, CH₃) et les deux sources (S₁, S₂), et étant **caractérisé en ce que** chaque chemin entre une source et une charge comporte un dispositif de commutation unique, et **en ce que**, pour au moins une paire de charges déterminée (CH₁, CH₂), les deux dispositifs de commutation (H₁, H₂) (H₃, H₄) sur les chemins reliant chaque source (S₁, S₂) aux deux charges (CH₁, CH₂) de ladite paire sont intégrés dans un interrupteur double flux (I₁, I₂), qui est un appareil intégrant deux dispositifs de commutation (H₁, H₂) (H₃, H₄) (H₅, H₆) aptes à piloter chacun la liaison d'un conducteur (F₆, F₈) (F₉, F₁₁) (F₇, F₁₀) avec le même contact central (K₃) (K₄) (K₅), appelé point milieu, ledit interrupteur double flux (I₁, I₂) étant connecté en son point milieu (K₄, K₅) à la sortie (F₁, F₂) destinée à être connectée à la source (S₁, S₂) correspondante.

2. Circuit de distribution d'électricité selon la revendication 1 dans lequel, pour chaque charge (CH₃, CH_{2+N}) n'appartenant pas à ladite paire, les dispositifs de commutation sur les chemins reliant cette charge aux deux sources (S₁, S₂) sont intégrés dans un interrupteur double flux (I₃, I_{2+N}) connecté en son point milieu (K₅, K_{4+N}) à la sortie (F₅, F_{4+N}) destinée à être connectée à ladite charge (CH₃, CH_{2+N})

3. Circuit de distribution d'électricité selon la revendication précédente pour lequel les interrupteurs double flux (I₃, I_{2+N}) connectés en leur point milieu aux sorties (F₅, F_{4+N}) destinées à être connectées à une charge (CH₃, CH_{2+N}), sont dimensionnés pour des contraintes de fonctionnement inférieures ou égales à la plus forte des contraintes de fonctionnement des deux interrupteurs double flux (I₁, I₂) connectés en leur point milieu aux sorties (F₁, F₂) destinées à être connectées à une source (S₁, S₂).

4. Circuit de distribution d'électricité selon l'une des revendications précédentes dont les conducteurs (F₁ à F₁₁) et les dispositifs de commutation (H₁, H₂, H₃, H₄, H₅, H₆) sont agencés pour traiter du courant triphasé.

5. Installation comportant un circuit selon l'une des revendications 1 à 4, deux sources (S₁, S₂) et des charges (CH₁, CH₂, CH₃, CH_{2+N}) alimentées par les sources au moyen dudit circuit, dont chaque interrupteur (I₁, I₂, I₃, I_{2+N}) est dimensionné pour répondre aux contraintes de fonctionnement de la charge ou de la source connectée à son point milieu.

6. Installation selon la revendication précédente, comportant deux sources aptes (S₁, S₂) à délivrer chacune une puissance déterminée et au moins deux charges (CH₁, CH₂) présentant des modes de fonctionnement pouvant nécessiter l'alimentation des deux sources, ces deux charges formant ladite paire de charges.

7. Installation selon la revendication précédente dans laquelle les deux charges (CH₁, CH₂) faisant partie de ladite paire sont celles qui imposent, à un organe de commutation placé en série avec elles, les contraintes maximales sur l'ensemble des charges de l'installation.

## Patentansprüche

1. Elektrizitätsverteilungsschaltung, welche dazu bestimmt ist, mindestens zwei Lasten (CH₁, CH₂, CH₃) aus zwei Quellen (S₁, S₂) zuzuführen, umfassend Leiter (F₁ bis F₁₁), von denen bestimmte (F₃, F₄, F₅, F₁, F₂) Ausgänge bilden, die geeignet sind, mit den Quellen (F₁, F₂) und mit den Lasten (F₃, F₄, F₅) verbunden zu werden, und Schaltvorrichtungen (H₁, H₂, H₃, H₄, H₅, H₆), wobei die Schaltung angeordnet ist, damit die Leiter mit den Schaltvorrichtungen mindestens einen Weg erstellen, der die Elektrizität zwischen jeder Last (CH₁, CH₂, CH₃) und den beiden Quellen (S₁, S₂) leitet, und **dadurch gekennzeichnet, dass** jeder Weg zwischen einer Quelle und einer Last eine einzige Schaltvorrichtung umfasst, und dadurch, dass für mindestens ein bestimmtes Paar von Lasten (CH₁, CH₂) die beiden Schaltvorrichtungen (H₁, H₂) (H₃, H₄) auf den Wegen, die jede Quelle (S₁, S₂) mit den beiden Lasten (CH₁, CH₂) des Paars verbinden, in einem Doppelstromunterbrecher (I₁, I₂) integriert sind, der ein Gerät ist, das zwei Schaltvorrichtungen (H₁, H₂) (H₃, H₄) (H₅, H₆) integriert, die geeignet sind, jeweils die Verbindung mit einem Leiter (F₆, F₈) (F₉, F₁₁) (F₇, F₁₀) mit demselben zentralen Kontakt (K₃) (K₄) (K₅) zu steuern, der als Mittelpunkt bezeichnet wird, wobei der Doppelstromunterbrecher (I₁, I₂) an seinem Mittelpunkt (K₄, K₅) mit dem Ausgang (F₁, F₂) verbunden ist, der dazu bestimmt ist, mit der entsprechenden Quelle (S₁, S₂) verbunden zu werden.

2. Elektrizitätsverteilungsschaltung nach Anspruch 1, wobei für jede Last (CH₃, CH_{2+N}), die nicht zu dem Paar gehört, die Schaltvorrichtungen auf den Wegen, die diese Last mit den beiden Quellen (S₁, S₂) verbinden, in einem Doppelstromunterbrecher (I₃, I_{2+N}) integriert sind, welcher an seinem Mittelpunkt (K₅, K_{4+N}) mit dem Ausgang (F₅, F_{4+N}) verbunden ist, der dazu bestimmt ist, mit der entsprechenden Last (CH₃, CH_{2+N}) verbunden zu werden.

3. Elektrizitätsverteilungsschaltung nach dem vorhergehenden Anspruch, wobei die Doppelstromunterbrecher (I₃, I_{2+N}), die an ihrem Mittelpunkt mit den Ausgängen (F₅, F_{4+N}) verbunden sind, welche dazu bestimmt sind, mit einer Last (CH₃, CH_{2+N}) verbunden zu werden, für Betriebsbelastungen kleiner oder gleich der stärksten Betriebsbelastung der beiden Doppelstromunterbrecher (I₁, I₂) bemessen sind, die an ihrem Mittelpunkt mit den Ausgängen (F₁, F₂) verbunden sind, welche dazu bestimmt sind, mit einer Quelle (S₁, S₂) verbunden zu werden.

4. Elektrizitätsverteilungsschaltung nach einem der vorhergehenden Ansprüche, wobei die Leiter (F₁ bis F₁₁) und die Schaltvorrichtungen (H₁, H₂, H₃, H₄, H₅, H₆) angeordnet sind, um einen dreiphasigen Strom zu behandeln.

5. Anlage, umfassend eine Schaltung nach einem der Ansprüche 1 bis 4, zwei Quellen (S₁, S₂) und Lasten (CH₁, CH₂, CH₃, CH_{2+N}), die von den Quellen mittels der Schaltung versorgt werden, wobei jeder Unterbrecher (I₁, I₂, I₃, I_{2+N}) bemessen ist, um die Betriebsbelastungen der Last oder der an seinem Mittelpunkt angeschlossenen Quelle zu erfüllen.

6. Anlage nach dem vorhergehenden Anspruch, umfassend zwei Quellen (S₁, S₂), die geeignet sind, jeweils eine bestimmte Leistung zu liefern, und mindestens zwei Lasten (CH₁, CH₂), die Betriebsmodi aufweisen, welche die Versorgung der beiden Quellen erfordern können, wobei die beiden Lasten das Paar von Lasten bilden.

7. Anlage nach dem vorhergehenden Anspruch, wobei die beiden Lasten (CH₁, CH₂), die einen Teil des Paars bilden, jene sind, die auf ein Schaltelement, das mit diesen in Serie angeordnet ist, die maximalen Belastungen der Gesamtheit der Lasten der Anlage ausüben.

## Claims

1. Circuit for distributing electricity intended to supply at least two loads (CH₁, CH₂, CH₃) from two sources (S₁, S₂), comprising conductors (F₁ to F₁₁), some of which (F₃, F₄, F₅, F₁, F₂) form outputs capable of being connected to the sources (F₁, F₂) and to the loads (F₃, F₄, F₅), and switching devices (H₁, H₂, H₃, H₄, H₅, H₆), the circuit being arranged so that the conductors with the switching devices establish at least one path conducting electricity between each load (CH₁, CH₂, CH₃) and the two sources (S₁, S₂), and being **characterised in that** each path between a source and a load comprises a single switching device, and **in that**, for at least one pair of determined loads (CH₁, CH₂), the two switching devices (H₁, H₂) (H₃, H₄) on the paths connecting each source (S₁, S₂) to the two loads (CH₁, CH₂) of said pair are integrated in a double-flow switch (I₁, I₂), which is an apparatus integrating two switching devices (H₁, H₂) (H₃, H₄) (H₅, H₆) each capable of controlling the connection of a conductor (F₆, F₈) (F₉, F₁₁) (F₇, F₁₀) to the same central contact (K₃) (K₄) (K₅), called central point, said double-flow switch (I₁, I₂) being connected at its central point (K₄, K₅) to the output (F₁, F₂) intended to be connected to the corresponding source (S₁, S₂).

2. Circuit for distributing electricity according to claim 1, wherein, for each load (CH₃, CH_{2+N}) that does not belong to said pair, the switching devices on the paths connecting this load to the two sources (S₁, S₂) are integrated in a double-flow switch (I₃, I_{2+N}) that is connected at its central point (K₅, K_{4+N}) to the output (F₅, F_{4+N}) intended to be connected to said load (CH₃, CH_{2+N}).

3. Circuit for distributing electricity according to the preceding claim, wherein the double-flow switches (I₃, I_{2+N}) that are connected at their central point to the outputs (F₅, F_{4+N}) intended to be connected to a load (CH₃, CH_{2+N}) are designed for operating stresses that are less than, or equal to the greatest operating stress of the two double-flow switches (I₁, I₂) that are connected at their central point to the outputs (F₁, F₂) intended to be connected to a source (S₁, S₂).

4. Circuit for distributing electricity according to any one of the preceding claims, wherein the conductors (F₁ to F₁₁) and the switching devices (H₁, H₂, H₃, H₄, H₅, H₆) are arranged to process three-phase current.

5. Installation comprising a circuit according to any one of claims 1 to 4, with two sources (S₁, S₂) and loads (CH₁, CH₂, CH₃, CH_{2+N}) supplied by the sources by means of said circuit, each switch (I₁, I₂, I₃, I_{2+N}) of which is designed to respond to the operating stresses of the load or of the source connected to its central point.

6. Installation according to the preceding claim, comprising two sources (S₁, S₂) each capable of delivering a determined power and at least two loads (CH₁, CH₂) having operating modes that can require the supply from the two sources, these two loads forming said pair of loads.

7. Installation according to the preceding claim, wherein the two loads (CH₁, CH₂) forming part of said pair are those that impose, on a switching component placed in series therewith, the maximum stresses on all of the loads of the installation.
